# EUROPÄISCHE PATENTSCHRIFT

(11) **EP 0 637 784 B1**
(45) Veröffentlichungstag und Bekanntmachung des Hinweises auf die Patenterteilung: **23.12.1998**
(21) Anmeldenummer: 93115070.0
(22) Anmeldetag: 17.09.1993
(51) Int. Cl.: G05B 19/042, H04L 12/40

(54) **Modul mit Busankoppler**
Module with bus connector
Module avec coupleur pour bus

(30) Priorität: 05.08.1993 DE 9311707 U
(43) Veröffentlichungstag der Anmeldung: 08.02.1995
(73) Patentinhaber: SIEMENS AKTIENGESELLSCHAFT, 80333 München (DE)
(72) Erfinder: Wolf, Johann, Dr. Dipl.-Ing., D-93080 Pentling (DE)

(56) Entgegenhaltungen:
- EP-A- 0 279 168
- EP-A- 0 434 986
- DE-U- 9 304 021
- FR-A- 2 624 627

## Beschreibung

Die Erfindung bezieht sich auf ein Schutzschalt-Modul zum Einwirken auf das Auslösesystem eines Schutzschalters mittels eines Auslösebefehls.

Eine bekannte Schaltungsanordnung (EP-A-0 279 168) arbeitet mit einer Zentraleinheit, die ihr vorliegende Information über eingeschaltete Verbraucher auswertet, um den zugehörigen Strom-Sollwert aus einem Speicher abzurufen und den momentanen Istwert dieses Stromes mit dem Sollwert zu vergleichen. Zum Zuordnen der jeweiligen Adresse an Teilnehmerstationen eines Bussystems ist es auch bekannt, als Informationsübertrager vom Programmiergerät zur Eingabevorrichtung der Teilnehmerstation mit einem Laser zu arbeiten (DE-U-9 304 021).

Der Erfindung liegt die Aufgabe zugrunde, ein frei einsetzbares Schutzschalt-Modul zu entwickeln, das geeignet ist, ein Schutzsystem mit zusätzlichen Schutzfunktionen auch in Nachrüstung zu unterlegen.

Die Lösung der geschilderten Aufgabe erfolgt erfindungsgemäß durch ein Schutzschalt-Modul nach Anspruch 1, auch kurz Modul genannt. Beim Schutzschalt-Modul steht ein Busankoppler mit einem Kontaktsystem zum elektrischen und gegebenenfalls mechanischen Anschließen an einem Bus in Verbindung. Beim Schutzschalt-Modul ist der Busankoppler auch mit einer Auswerteelektronik zur programmierten Verarbeitung von Meßsignalen beziehungsweise von Informationen über einen Ausschaltbefehl erfordernde Zustände verbunden. Die Auswerteelektronik ist auch zur Abgabe von Ausschaltbefehlen ausgelegt, wobei die Meßsignale beziehungsweise die Information über Zustände, die einen Ausschaltbefehl erforderlich machen, über Bus zugeführt werden können.

Die Ausschaltbefehle sind geeignet zur Auslösung eines Auslösesystems für einen Schutzschalter. Sie können entweder über Bus oder auch über eine Leitung direkt dem Auslösesystem zugeführt werden.

Das Modul ist durch einen derartigen Busankoppler in Verbindung mit der Auswerteelektronik in der Lage, Ausschaltbefehle unter Verarbeitung der Meßsignale selbst zu bilden und sie an das Auslösesystem für einen vorgesehenen Schutzschalter abzugeben.

Das durch handelsübliche Schutzschalter erreichte Schutzprofil läßt sich dadurch mit zusätzlichen Schutzprofilen unterlegen. Die durch den Schutzschalter vorgegebene Sicherheit wird dann mit früher oder alternativ zum Zuge kommenden Schutzwirkungen ergänzt.

Die Auswerteelektronik kann vorteilhafterweise Einrichtungen zum Laden eines geeigneten Programms zur Verarbeitung aufweisen. Dieses kann insbesondere auch geeignet sein zur Abgabe von Ausschaltbefehlen über Bus. Das Modul läßt sich hierdurch den unterschiedlichsten Anforderungen anpassen. Verständlicherweise kann das Programm auch durch eine Platine hardwaremäßig eingebaut sein.

Es ist günstig, wenn das Modul über eine Einrichtung zum Laden eines Programms über Bus verfügt. Es erübrigt sich dann ein Programmiergerät vor Ort anzubringen; das Modul kann dann von entfernter Stelle aus über den Bus mit einem geeigneten Programm geladen werden.

Je nach Anwendungsfall kann es vorteilhaft sein, ein Programm im Modul selbst zu speichern und Schnittstellen zur Eingabe von Parametern vorzusehen. Auch bei geringen Programmkenntnissen läßt sich dann ein Programm leicht an jeweilige Aufgaben anpassen. Das Modul kann in einem Adapter angeordnet sein, wobei die Auswerteelektronik mit einem Auslösesystem verbunden ist, das in Wirkverbindung mit einer Auslöseachse zur Auslösung eines Schutzschalters steht. Im Modul können auch Sensoren, insbesondere Stromsensoren, beziehungsweise Meßglieder angeordnet werden, die die Meßsignale beziehungsweise Zustandsinformationen für die Auswerteelektronik selbst bereitstellen. Das Modul kann auch zusätzlich einen gesonderten Anschluß für einen externen Sensor aufweisen.

Durch ein Modul der geschilderten Art kann man beispielsweise die Realisierung einer bestimmten Strom-Zeit-Auslösekennlinie erzielen, ohne handelsübliche Schutzschalter in ihren approbierten Eigenschaften zu beeinträchtigen. Durch das Modul erzielt man mit bewährten Schutzschaltern, die einen bestimmten Schutz sicherstellen, vielfältige Möglichkeiten zusätzliche Schutzprofile zu verwirklichen.

Die Erfindung soll nun anhand von in der Zeichnung grob schematisch wiedergegebenen Ausführungsbeispielen näher erläutert werden:
- In FIG 1: ist ein Schutzschalt-Modul dargestellt, auch kurz Modul genannt.
- FIG 2: gibt einen Koppeladapter mit eingebautem Modul zum Auslösen eines anbaubaren Schutzschalters wieder.
- In FIG 3: ist eine Schaltungsanordnung mit Modul, Sensor, Koppeladapter, Schutzschalter und einem zu schützenden Gerät veranschaulicht.
- In FIG 4: ist ein Modul mit integriertem Sensorelement sowie ein zusätzlicher Sensor an einem zu schützenden Gerät wiedergegeben.
- In FIG 5: ist eine Tragschiene mit eingebauter Datenschiene und aufgesetztem Schutzschalter sowie einem Modul in einem Koppeladapter veranschaulicht.

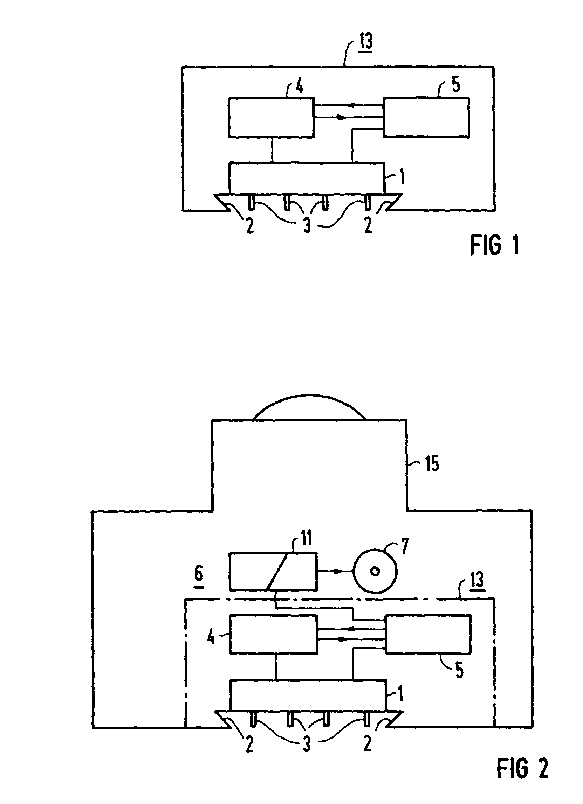

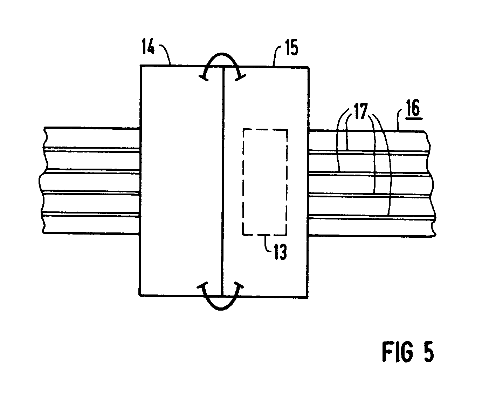

Das Modul 13 nach FIG 1 weist ein Kontaktsystem 1 auf, das zum elektrischen Anschließen an Busleitern 17 in einer Tragschiene 16 dient, man vergleiche FIG 5. Die Busleiter eines Information führenden Busses könne am Boden einer Tragschiene 16 in Form einer Datenschiene eingelegt sein. Das Modul läßt sich mittel Ausnehmungen 2 und mechanischer Verriegelungen auf die Tragschiene aufsetzen und daran halten. Derartige Halterungen sind bei Schutzschaltern in der Ausführung als anreihbare Geräte üblich. Der Kontakt zu Busleitern kann durch Kontaktstifte 3 erfolgen. Das Kontaktsystem 1 steht mit einem Busankoppler 4 und einer Auswerteelektronik 5 in Verbindung. Busankoppler 4 und Auswerteelektronik 5 stehen andererseits wechselweise direkt in Verbindung. Die Auswerteelektronik 5 kann ihre Bordnetzspannung vom Kontaktsystem 1 direkt beziehen. Busankoppler 4 und Auswerteelektronik 5 sind zur Erfassung von Meßsignalen, beziehungsweise von Zustandsinformationen, ausgelegt. Die Auswerteelektronik 5 kann diese programmiert anhand von vorgegebenen Programmen verarbeiten und über den Busankoppler Ausschaltbefehle für vorgegebene Schutzschalter abgeben. Man erzielt dadurch eine intelligente Verarbeitung von Information, die im Zusammenspiel mit der Übertragung durch einen Bus Schutzschaltern variabel zugeführt werden kann. Man kann dadurch handelsübliche Schutzschalter mit überprüften, approbierten Schutzwirkungen mit weiteren Schutzwirkungen unterlegen. Der adressierte Schutzschalter kann dann bei bestimmten Gegebenheiten bereits früher auslösen als der Schutzschalter aufgrund seiner konstruktiven Vorgaben auslösen könnte.

Die Auswerteelektronik 5 zur Weiterverarbeitung von Meßsignalen beziehungsweise Zustandsinformationen kann vorteilhafterweise Einrichtungen zum Laden eines geeigneten Programms zur Verarbeitung aufweisen. Die Ausschaltbefehle können dem Auslösesystem für einen Schutzschalter zugeführt werden, auch im Sinne einer ODER-Verknüpfung zu einem direkten Ausschaltbefehl, der von einer Teilnehmerstation einer Gebäudesystemtechnik im Sinne einer Fernsteuerung ausgesendet werden kann. Der Ausschaltbefehl läßt sich einem Auslösesystem eines Koppeladapters für einen Schutzschalter zuleiten.

Vorteilhafterweise ist das Modul mit einer Einrichtung zum Laden eines Programms versehen. In der Praxis kann es vorteilhaft sein, ein Programm in der Auswerteelektronik 5 fest zu installieren und Schnittstellen zur Eingabe von Parametern auszubilden.

Das Modul 13 kann nach FIG 2 in einem Adapter zum Fernauslösen eines Schutzschalters angeordnet sein. Mittels der Auswerteelektronik 5 kann das Modul auf einen Auslösemagneten 11 eines geeigneten Auslösesystems 6 einwirken, wobei der Auslösemagnet 11 insbesondere als Arbeitsstromauslöser ausgebildet sein kann. Durch eine Wirkverbindung zur Auslöseachse 7 erreicht man eine mechanische Kopplung zu anreihbaren Schutzschaltern. Das Modul liefert eine sogenannte Zusatzfunktion für den Schutzschalter.

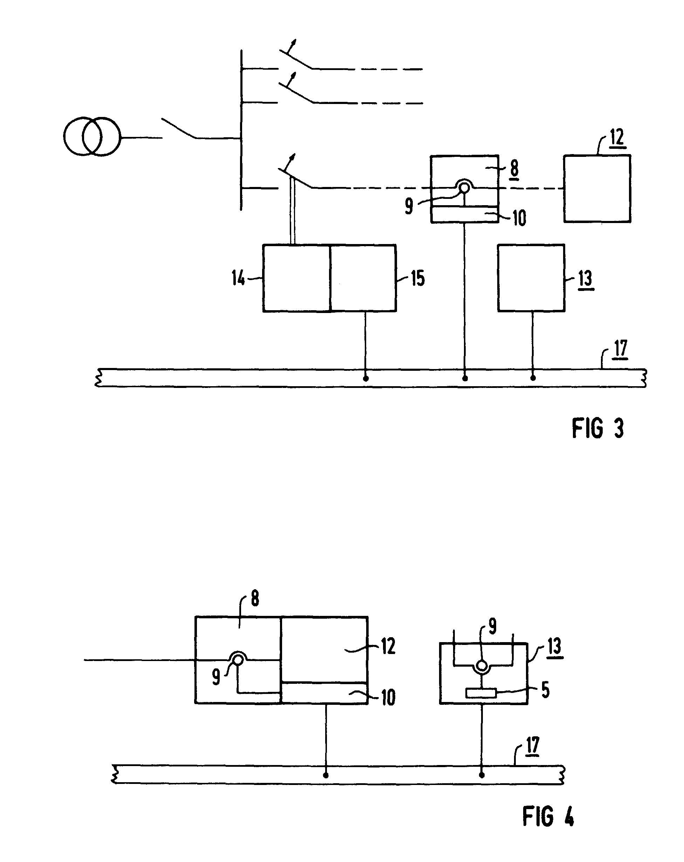

Die dem Modul zuzuführenden Meßsignale können von Sensoren 8 mit Sensorelementen 9 herrühren. So kann nach FIG 3 ein Sensor 8 mittels seines Sensorelements 9 den Strom in einer Zweigleitung zu einem zu schützenden Gerät 12 überwachen und die Meßergebnisse über Bus einem Modul 13 zuführen, das einen gegebenenfalls gebildeten Ausschaltbefehl über Bus dem Koppeladapter 15 zuleitet, der mit seinem Auslösesystem für die Auslösung eines angereihten Schutzschalters 14 sorgt. Der Schutzschalter 14 kann dann ein zu schützendes Gerät 12 bei geeignetem Programm zur Verarbeitung besser schützen als ein handelsüblicher Schutzschalter, der auf den Schutz der Zweigleitung abgestellt ist, und der besondere Gegebenheiten des zu schützenden Geräts 12 in der Regel nicht berücksichtigen kann.

Verständlicherweise kann der Sensor 8 auch nach FIG 4 mit einem Gerät 12 zusammengebaut sein, wobei das Gerät als Teilnehmerstation der Gebäudesystemtechnik oder auch als zu schützendes Gerät verstanden werden kann. Der Sensor 8 gibt ebenso wie in FIG 3 seine Meßergebnisse über eine Ankoppeleinrichtung 10 an den Bus weiter, wobei die Ankoppeleinrichtung 10 jeweils aus einem Kontaktsystem und einem Busankoppler besteht. Das Modul 13 kann auch selbst Sensoren, insbesondere Stromsensoren, beziehungsweise Meßglieder hierzu aufweisen, wie es in FIG 4 veranschaulicht ist. Hierdurch lassen sich zusätzliche Einflüsse für das Schutzprofil berücksichtigen. Wenn das Modul zusätzlich einen gesonderten Anschluß für einen externen Sensor 8 aufweist, kann man Meßsignale alternativ oder zusätzlich dem Modul durch über eine direkte Leitung zuführen.

In FIG 5 ist ein Schutzschalter 14 auf einer Tragschiene 16 angeordnet wiedergegeben, an dem ein Koppeladapter 15 in einem gesonderten Gehäuse angebaut ist. Es genügt, wenn der Koppeladapter 15 ein Auslösesystem 6 nach FIG 2 aufweist. Es ist auch möglich, ein Modul 13 im Koppeladapter unterzubringen. Verständlicherweise kann auch ein geeignetes Auslösesystem in einem Schutzschalter 6 untergebracht sein. In der Praxis sieht man hiervon gerne ab, da ein derartiger Schutzschalter kostenaufwendig wäre, da die geschilderte Auslösung infolge von Meßwerten nicht der Regelanforderung entspricht.

Das Modul ermöglicht es, eine Auslösung bei bestimmten Strom-Zeitwerten sicherzustellen und in logischer ODER-Verknüpfung einem Schutzschalter weitere Auslöseverhalten hinzuzufügen. In einer Verteilung können auch mehrere Module Befehle an einen Schutzschalter melden, da alle Befehle in logischer ODER-Verknüpfung abgegeben werden.

Die Bedeutung des Moduls läßt sich anhand der FIG 3 und 4 veranschaulichen:

In einer elektrischen Energieverteilungsstation werden Abzweigleitungen in üblicher Weise jeweils durch Leitungsschutzschalter geschützt, die in ihrem Abschaltverhalten auf den Querschnitt der jeweiligen Zweigleitung abgestimmt sind. Dieser Schutz muß sich mit den Anforderungen angeschlossener Geräte, beispielsweise eines Gerätes 12, nicht decken. Vielmehr kann ein Gerät 12 sensibler sein und ein anderes Schutzprofil erfordern. Wenn beispielsweise ein angeschlossenes Gerät mit einem Nennstrom von 5 A einen Strom von 10 A maximal drei Minuten verträgt, dann ist dieses Gerät durch einen Leitungsschutzschalter, dessen Schutzprofil in üblicher Weise auf eine Leitung von 1,5 mm² abgestimmt ist, nicht ausreichend zu schützen. Das Modul stellt in derartigen Fällen eine intelligente Zusatz funktion zur Verfügung, indem das Schutzprofil, oder mit anderen Worten das Schutzprogramm, in einer frei anbaubaren Zusatzkomponente einen Ausschaltbefehl generiert, im erwähnten Beispiel also mit einem Strom von 10 A nach drei Minuten einen Ausschaltbefehl generiert.

Das Modul kann durch ein geeignetes Programm dafür eingerichtet sein, einen Antrieb, einer Motor oder einen Magneten zu schützen, indem bei bestimmten geeigneten Meßwerten ein Befehl erzeugt wird und beispielsweise mittels eines Schutz schalters eine Abschaltung auf eine der beschriebenen Weisen erfolgt.

Da sich das Modul auf verschiedene Arten auch nachträglich einsetzen läßt, können die durch das Modul bereitgestellten Zusatzfunktionen dort eingesetzt werden, wo sie benötigt werden. Andere Leitungszweige und Geräte können auf herkömmliche Weise betrieben werden. Durch das Modul in der Funktion ergänzte Geräte und marktübliche Geräte können im Mischbetrieb nebeneinander eingesetzt werden.

## Patentansprüche

1. Schutzschalt-Modul zum Einwirken auf das Auslösesystem eines Schutzschalter mittels eines Auslösebefehls,
dadurch gekennzeichnet,
daß ein Busankoppler (4) mit einem Kontaktsystem (1) zum elektrischen und gegebenenfalls mechanischen Anschließen an einem Bus in Verbindung steht mit einer Auswerteelektronik (5)
zur programmierten Verarbeitung von Meßsignalen beziehungsweise von Informationen über einen Ausschaltbefehl erfordernde Zustände und zur Abgabe von Ausschaltbefehlen,
wobei die Meßsignale beziehungsweise Informationen über Zustände über Bus zuführbar sind.

2. Schutzschalt-Modul nach Anspruch 1, **dadurch gekennzeichnet,** daß die Auswerteelektronik (5) Einrichtungen zum Laden eines geeigneten Programms zur Verarbeitung aufweist.

3. Schutzschalt-Modul nach Anspruch 2, **gekennzeichnet durch** eine Einrichtung zum Laden eines Programms über Bus.

4. Schutzschalt-Modul nach Anspruch 3, **dadurch gekennzeichnet**, daß das Programm fest gespeichert ist und Schnittstellen zur Eingabe von Parametern aufweist.

5. Schutzschalt-Modul nach einem der Ansprüche 1 bis 4, **dadurch gekennzeichnet,** daß das Modul in einem Koppeladapter (15) angeordnet ist und die Auswerteelektronik (5) mit einem Auslösesystem (6) verbunden ist, das in Wirkverbindung mit einer Auslöseachse (7) steht.

6. Schutzschalt-Modul nach einem der Ansprüche 1 bis 5, **dadurch gekennzeichnet,** daß im Modulgehäuse Sensoren (9), insbesondere Stromsensoren beziehungsweise Meßglieder, angeordnet sind.

7. Schutzschalt-Modul nach einem der Ansprüche 1 bis 6, **dadurch gekennzeichnet**, daß das Modul zusätzlich einen gesonderten Anschluß für einen externen Sensor (8) aufweist.

## Claims

1. Circuit-breaker module for acting on the tripping system of a circuit-breaker by means of a tripping command, characterized in that a bus coupler (4) is connected to a contact system (1) for the electrical, and optionally mechanical, connection to a bus, with evaluation electronics (5) for the programmed processing of measuring signals or information on states which require a disconnection command and for the delivery of disconnection commands,
whereby the measuring signals or information on states can be supplied by way of a bus.

2. Circuit-breaker module according to claim 1, characterized in that the evaluation electronics (5) have devices for loading a suitable program for processing.

3. Circuit-breaker module according to claim 2, characterized by a device for loading a program by way of a bus.

4. Circuit-breaker module according to claim 3, characterized in that the program is firmly stored and has interfaces for the input of parameters.

5. Circuit-breaker module according to one of claims 1 to 4, characterized in that the module is arranged in a coupling adaptor (15) and the evaluation electronics (5) are connected to a tripping system (6) which is in operative connection with a tripping shaft (7).

6. Circuit-breaker module according to one of claims 1 to 5, characterized in that housing sensors (9), in particular current sensors or measuring elements, are arranged in the module.

7. Circuit-breaker module according to one of claims 1 to 6, characterized in that the module additionally has a separate terminal for an external sensor (8).

## Revendications

1. Module disjoncteur de protection, destiné à agir sur le système de déclenchement d'un disjoncteur de protection au moyen d'un ordre de coupure,
caractérisé en ce
qu'un coupleur pour bus (4) est relié à un système de contact (1) en vue d'un raccordement électrique et éventuellement mécanique à un bus et à une électronique d'exploitation (5)
pour le traitement programmé de signaux de mesure ou d'informations relatives à des états nécessitant un ordre de coupure
et pour la délivrance d'ordres de coupure,
les signaux de mesure ou les informations relatives à des états pouvant être transmis par l'intermédiaire de bus.

2. Module disjoncteur de protection selon la revendication 1, caractérisé en ce que l'électronique d'exploitation (5) comporte des dispositifs de chargement d'un programme de traitement approprié.

3. Module disjoncteur de protection selon la revendication 2, caractérisé par un dispositif de chargement d'un programme par l'intermédiaire d'un bus.

4. Module disjoncteur de protection selon la revendication 3, caractérisé en ce que le programme est mémorisé de manière fixe et comporte des interfaces pour l'entrée de paramètres.

5. Module disjoncteur de protection selon l'une des revendications 1 à 4, caractérisé en ce que le module est disposé dans un adaptateur de couplage (15) et l'électronique d'exploitation (5) est reliée à un système de déclenchement (6) qui est en liaison active avec un arbre de déclenchement (7).

6. Module disjoncteur de protection selon l'une des revendications 1 à 5, caractérisé en ce que le boîtier du module renferme des détecteurs (9), en particulier des détecteurs de courant ou des organes de mesure.

7. Module disjoncteur de protection selon l'une des revendications 1 à 6, caractérisé en ce que le module comporte de plus un raccordement séparé pour un détecteur (8) externe.
